# EUROPÄISCHE PATENTANMELDUNG

(11) **EP 1 841 004 A1**
(43) Veröffentlichungstag der Anmeldung: **03.10.2007**
(21) Anmeldenummer: 06006489.6
(22) Anmeldetag: 29.03.2006
(51) Int. Cl.: H01Q 1/22, G06K 19/077

(54) **Transponder-Antenne auf einem Substrat mit Antistatikbeschichtung**

(71) Anmelder: Hueck Folien Ges.m.b.H, 4342 Baumgartenberg (AT)
(72) Erfinder: Treutlein, Roland, 92712 Pirk (DE); Bergsmann, Martin, Dr., 4020 Linz (DE)
(74) Vertreter: Landgraf, Elvira

(57) **Zusammenfassung**

Antenne zur Montage auf ICs, dadurch gekennzeichnet, dass das Trägersubstrat, auf dem die Antenne aufgebracht ist, mit einer Antistatikbeschichtung versehen ist, die die Funktion der Antenne nicht negativ beeinflußt.

## Beschreibung

Die Erfindung betrifft eine Transponder-Antenne, die gegen statische Aufladung geschützt ist.

Transponder - Antennen bestehen im Allgemeinen aus einer partiellen leitfähigen Schicht, die auf einem flexiblen und/oder starrem oder halbstarrem Substrat aufgebracht ist.

Bei der Montage eines ICs (Integrated Circuit) auf einer Antenne, kann es zu Entladungen kommen, die den IC beschädigen oder sogar zerstören können.
Eine Zerstörung des ICs kann bereits durch Entladespannungen ab 50 V auftreten.

Ursache dafür ist die statische Aufladung des Substrats, die häufig während des Produktionsprozesses auftritt. Bereits beim Abwickeln eines Substrats, trennen der Kunststoffschichten oder durch Reibung treten statische Aufladungen auf. Insbesondere bei hoher Produktionsgeschwindigkeit ist die Gefahr der statischen Aufladung groß. Die Neigung zur statischen Aufladung ist dann verstärkt, wenn die Anlage kunststoffbeschichtete Bahnführungselemente aufweist, sodass keine Entladung möglich ist. Vorteil dieser Bahnführungselemente ist, dass praktisch kein Schlupf auftritt. Bei Auf- und Abwicklung der Kunststofffolien treten statische Entladungen durch Reibung auf.

Um derartige Entladungen zu vermeiden, werden derzeit Elemente, die eine statische Aufladung des flexiblen Substrates verhindern, wie Kupfergirlanden, Entladebalken und dergleichen in der Anlage angebracht.
Diese Elemente können jedoch bisher derartige Entladungen nicht vollständig vermeiden, sodass es immer wieder zu Zerstörungen von ICs während des Produktions-, Bestückungs- oder Laminierprozesses kommt. Insbesondere bei Entladungen, die bereits unter einer Spannung von einigen kV stattfinden, sind die Elemente wirkungslos. Da jedoch bereits Entladungen bei wesentlich geringeren Spannungen die hochempfindlichen ICs beschädigen oder zerstören können, besteht der Bedarf nach verbesserten und zuverlässigen Lösungen zur Vermeidung der Entladung.

Aufgabe der Erfindung war es daher, einen Aufbau einer Antenne bereitzustellen, die gegen statische Aufladungen geschützt ist.

Gegenstand der Erfindung ist daher eine Antenne, auf die ein IC montiert wird, dadurch gekennzeichnet, dass das Trägersubstrat, auf dem die Antenne aufgebracht ist, mit einer Antistatikbeschichtung versehen ist, die die Funktion der Antenne nicht negativ beeinflusst.

Die Antistatikbeschichtung kann aus elektrisch leitfähigen Polymeren, wie beispielsweise Polyacetylen, Poly-p-phenylen, Polypyrrole, Polythiophene, Poly-p-phenylenvinylen, niedermolekulare makrocyclische Halbleiter, Organopolysilane, Polyschwefelnitrid und/oder Polyaniline und/oder deren Derivate sein. Besonders bevorzugt werden als elektrisch leitfähige Polymere Polyanilin oder Polyethylendioxythiophen oder Polyethylendioxythiophenmethanol, Baytron® oder Baymatec® etc. verwendet.
Ferner kann die Antistatikbeschichtung aus einer dünnen semitransparenten Metallschicht, oder aus einer mit leitfähigen Partikeln oder Pigmenten, beispielsweise Ruß- oder metallischen Pigmenten oder Flakes, beispielsweise Silber- oder Kupferpigmenten oder -Flakes, gefüllten Lackschicht bestehen.
Die Antistatikbeschichtung wird in einer Dicke von 0,005 - 20 µm, bevorzugt 0,1-10 µm auf das flexible Trägersubstrat des Antennenaufbaus aufgebracht. Die Antistatikbeschichtung kann vollflächig oder partiell beispielsweise in Form von Bahnen und Streifen, im Bereich des ICs aufgebracht sein. Ferner kann die Antistatikbeschichtung ein- oder beidseitig vorhanden sein.

Als Trägersubstrat kommen beispielsweise flexible Kunststofffolien, beispielsweise aus PI, PP, OPP, PE, PPS, PEEK, PEK, PEI, PAEK, LCP, PEN, PBT, PET, PA, PC, COC, POM, ABS, PVC, PTFE, Fluorpolymere wie Teflon, PVB etc. in Frage.
Die Trägerfolien weisen vorzugsweise eine Dicke von 5 - 700 µm, bevorzugt 5 - 200 µm, besonders bevorzugt 5 - 50 µm auf.

Ferner können als Trägersubstrate Gewebe oder Vliese, wie Endlosfaservliese, Stapelfaservliese und dergleichen, die gegebenenfalls vernadelt und/oder kalandriert sein können, verwendet werden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasern, wie Viskosefasern eingesetzt werden. Die eingesetzten Vliese oder Gewebe weisen ein Flächengewicht von etwa 20 g/m² bis 500 g/m² auf. Gegebenenfalls müssen die Vliese oder Gewebe oberflächenbehandelt werden.

Auf dieses Trägersubstrat ist der Antennenaufbau aufgebracht, der im Wesentlichen aus einer leitfähigen Struktur bevorzugt aus einem Metall, insbesondere Kupfer oder Silber besteht.

Dieser Aufbau kann durch alle bekannten Verfahren, beispielsweise durch bekannte Ätzverfahren an einer Metallfolie, Kaschieren gegen einen Träger oder einer galvanisch aufgebrachten Schicht, Bedrucken oder Beschichten mit einer leitfähigen Paste mit metallischen Pigmenten oder durch partielle Bedampfung des Trägersubstrats aufgebracht werden.

Weiters kann die Strukturierung durch einen bekannten Prägeprozess erfolgen.

Die Aufbringung der Antistatikbeschichtung erfolgt vorzugsweise auf der dem Antennenaufbau gegenüberliegenden Seite des Trägersubstrats oder auf der Seite des Trägersubstrats, die den Antennenaufbau trägt oder auf beiden Seiten des Trägersubstrats und kann in jedem bekannten Beschichtungsverfahren, beispielsweise durch Spin-Coating, Aufstreichen, Aufdampfen, durch Drucken, (Tiefdruck, Flexodruck, Siebdruck, Offsetdruck, Digitaldruck und dergleichen) durch Aufsprühen, Sputtern oder Walzenauftragstechniken erfolgen.
Die Beschichtung kann sowohl vollflächig als auch partiell im Bereich des IC, oder als Punkt- oder Linenraster aufgebracht werden.

Dabei wird die Leitfähigkeit der antistatischen Beschichtung so eingestellt, dass sie unter den Produktionsbedingungen die Aufladung des Trägersubstrats verhindert, und andererseits die Streukapazität des RLC-Kreises der Antenne nicht oder nur unwesentlich stört und damit das Antennensignal nicht abschirmt oder verstimmt.

Die erfindungsgemäßen Antennen werden für elektronische Bauteile, Leiterbahnen, als RF-Antennen, für leitfähige Kontakte, Anschlussflächen für gedruckte Elektronik oder Kontakt-Pins für ICs verwendet.

### Beispiele:

### Beispiel 1:

Eine PEN Folie einer Dicke von 50 µm wird partiell mit einer 1 µm dicken Cu-Schicht unter Vakuum bedampft. Die partielle Kupferbeschichtung bildet die Antenne.
Im Bereich der anschließend zu bestückenden ICs wird eine partielle Beschichtung des leitfähigen Polymeren Baytron CPP 105 (2g/m²) als jeweils 2 cm breite Streifen aufgebracht.

### Beispiel 2:

Dies statische Aufladung des gemäß Beispiel 1 hergestellte Material wurde im Vergleich zu einem nicht mit einer Beschichtung aus leitfähigem Material im Bereich der zu bestückenden ICs versehen Materials (Vergleich) während des Bestückungsvorgangs gemessen.
Die Bestückungsgeschwindigkeit betrug 5000 Stk/h.
Die Ergebnisse sind in Tab. 1. dargestellt.

**Tab 1:**

| Meßpunkt | Vergleich kV/inch | Beispiel 1 kV/inch |
|---|---|---|
| Oberfläche der Rolle | 1,83 | -7,00 |
| Zwischen 1. Rolle und 1. Lenkrolle | -1,20 | -2,00 |
| Bestückungsbereich | 0,80 | -0,15 |
| Überprüfungsbereich | 4,00 | -1,30 |
| Aufrollbereich | 3,50 | -7,20 |

## Patentansprüche

1. Antenne auf die ein IC montiert werden kann, **dadurch gekennzeichnet, dass** das Trägersubstrat, auf dem die Antenne aufgebracht ist, mit einer Antistatikbeschichtung versehen ist, die die Funktion der Antenne nicht negativ beeinflusst.

2. Antenne nach Anspruch 1, **dadurch gekennzeichnet, dass** das Trägersubstrat ein flexibles Trägersubstrat ist.

3. Antenne nach einem der Ansprüche 1 oder 2, **dadurch gekennzeichnet, dass** die Antistatikbeschichtung aus einem elektrisch leitfähigen Polymeren besteht.

4. Antenne nach einem der Ansprüche 1 bis 3, **dadurch gekennzeichnet, dass** die Antistatikbeschichtung aus einer mit leitfähigen Pigmenten gefüllten Lackschicht besteht.

5. Antenne nach Anspruch 3, **dadurch gekennzeichnet, dass** die Antistatikbeschichtung aus Polyacetylen, Poly-p-phenylen, Polypyrrolen, Polythiophenen, Poly-p-phenylenvinylen, niedermolekularen makrocyclischen Halbleitern, Organopolysilanen, Polyschwefelnitrid und/oder Polyanilinen und/oder deren Derivaten besteht.

6. Antenne nach einem der Ansprüche 1 bis 5, **dadurch gekennzeichnet, dass** die Antistatikbeschichtung eine Dicke von 0,05 bis 20 µm aufweist.

7. Antenne nach einem der Ansprüche 1 bis 5, **dadurch gekennzeichnet, dass** die Antistatikbeschichtung eine Dicke von 0,1 bis 10 µm aufweist.

8. Antenne nach einem der Ansprüche 1, 2 oder 6, oder 7, **dadurch gekennzeichnet, dass** die Antistatikbeschichtung aus einer semitransparenten leitfähigen Metallschicht besteht.

9. Antenne nach einem der Ansprüche 1 bis 8, **dadurch gekennzeichnet, dass** die Antistatikbeschichtung partiell oder vollflächig aufgebracht ist.

10. Antenne nach einem der Ansprüche 1 bis 9, **dadurch gekennzeichnet, dass** die Antistatikbeschichtung ein- oder beidseitig auf dem Trägersubstrat aufgebracht ist.

11. Verwendung der Antenne nach einem der Ansprüche 1 bis 10 für elektronische Bauteile, Leiterplatten, RF-Antennen, leitfähige Kontakte, Anschlussflächen für gedruckte Elektronik oder Kontakt-Pins für ICs.
